# EUROPEAN PATENT SPECIFICATION

(11) **EP 2 366 619 B1**
(45) Date of publication and mention of the grant of the patent: **07.05.2014**
(21) Application number: 11158299.5
(22) Date of filing: 15.03.2011
(51) Int. Cl.: B62M 6/90

(54) **Electric bicycle**
Elektrisches Fahrrad
Bicyclette électrique

(30) Priority: 15.03.2010 NL 1037807
(43) Date of publication of application: 21.09.2011
(73) Proprietor: Curana Invest bvba, 8850 Ardooie (BE)
(72) Inventor: Vens, Dirk, 8800, ROESELARE (BE)
(74) Representative: Ostyn, Frans

(56) References cited:
- WO-A1-2007/119710
- WO-A1-2009/144525
- JP-A- 9 226 653
- JP-A- 10 255 744
- JP-A- 11 105 759
- JP-A- 2000 142 551
- JP-A- 2001 225 774

## Description

The present invention relates to a bicycle provided with an electrical drive device and a battery, comprising a battery holder which is adapted to keep the battery in a position in which it acts as the power source for the drive device, and a battery carrier which can be moved according to a predetermined path between a first position, in which the battery carried along thereby is not in said operating position, and a second position, in which the battery carried along thereby is in said operating position. The present invention furthermore relates to a component of an electric bicycle which is adapted to keep a battery in said operating position.

Electric bicycles are provided with a drive device comprising an electrical motor which is adapted to drive one of the wheels and a rechargeable battery which is adapted to supply the required electrical current to the motor.

Such a drive device may also comprise a group consisting of two or more cooperating batteries. Each time 'a battery' is mentioned in this patent application, this is intended to refer to both one single battery and a battery group comprising two or more separate batteries.

Some known electric bicycles are equipped with a holder which is adapted to keep the battery in a fixed position during cycling so that the contact points of the battery make electrical contact with the circuit of the drive device, in order to allow the battery to function as the power source for the drive device. This position of use is referred to in this patent application as the operating position of the battery.

The battery of an electric bicycle is relatively large and heavy and therefore it cannot easily be incorporated in a bicycle. After all, a considerable number of requirements have to be taken into account. In the first place, the electrical contact between the bicycle and the battery has to be maintained in all circumstances during cycling so that the satisfactory functioning of the bicycle is always ensured. Furthermore, it is also important to incorporate the battery in the bicycle in an aesthetically pleasing manner. Also, the battery has to be held in the holder in such a manner that it cannot move to and fro during cycling and thus produce annoying noises. In addition, the fact that the rechargeable battery will have to be recharged frequently and thus has to be able to be removed from the holder and replaced in a simple and usher-friendly manner also has to be taken into account.

There are battery holders for electric bicycles having a housing which encloses a tunnel-shaped hollow space in a hollow component which forms an integral part of the luggage carrier or is attached to the luggage carrier. This housing comprises an inlet opening via which the battery can be pushed into the hollow space and can be brought into the operating position. The hollow space has transverse dimensions which are slightly greater than the corresponding transverse dimensions of the battery. This tolerance is necessary in order to be able to move the battery inside the hollow space. However, due to this tolerance between the battery and the housing, the battery can move to and fro which produces annoying noises during cycling. An additional drawback of these battery holders is the fact that the access opening is only slightly larger than the battery itself, so that replacing the battery in the holder is not very easy or user-friendly. After all, the user has to position the relatively large and heavy battery exactly in front of the inlet opening (at the position of the luggage carrier) before it can be pushed into the tunnel-shaped hollow space. Another drawback is the fact that no other fixed bicycle components can be fitted at the position of the inlet opening. If, for example, a rear lamp is to be fitted at this position behind the inlet opening of the battery holder, the rear lamp has to be fitted in a detachable or tiltable manner so that the inlet opening is freely accessible. It is also possible to install the battery holder at a higher or lower level than the rear lamp, but this makes the battery holder more obvious, which is often undesirable from an aesthetic point of view.

With another type of battery holder for electric bicycles, the battery has to be placed in a space which, depending on the embodiment, is provided within an open structure or a closed housing. In order to be able to place the battery in the operating position, the side of the battery on which the electrical contact points are provided first has to be brought into the correct position and then the battery has to be tilted from this inclined position to the final operating position. When the battery has to be removed from the holder in order to be recharged, the battery first has to be brought to said inclined position before it can be removed from the housing. On account of the dimensions and the weight of the battery, these operations are relatively difficult for the average user of an electric bicycle. With these battery holders, the battery is also accommodated in the holder with a relatively large tolerance, so that the battery is able to move during cycling and causes annoying noises.

JP 10 255 744 A discloses an electric bicycle with the features of the preambles of claims 1 and 7, as mentioned in the first paragraph of this description. The battery holder of this bicycle does not offer a great degree of freedom in determining its position on the bicycle.

It is an object of the present invention to remedy the drawbacks of the existing battery holders.

This object is achieved by providing a bicycle with an electrical drive device and a battery, comprising a battery holder which is adapted to keep the battery in an operating position in which it acts as power source for the drive device, the bicycle further comprising a battery carrier which can be moved according to a predetermined path between a first position, in which the battery carried along thereby is not in said operating position, and a second position, in which the battery carried along thereby is in said operating position, whereas, according to this invention, the battery carrier is connected to the bicycle or the battery holder by means of a movement mechanism which defines a substantially rectilinear vertical or horizontal movement path for the battery carrier. This movement mechanism may also define a movement path which is composed of one or more horizontal, vertical or inclined movement trajectories.

The characterizing feature 'that the battery is carried along by the battery carrier' in this patent application is not only intended to mean that the battery is carried by the battery carrier, but also that it has been made to cooperate or can be made to cooperate with the battery carrier in any conceivable way that the battery is carried along by the battery carrier. The battery can thus be supported or carried by the battery carrier or a part thereof, for example resting on a supporting surface or accommodated in a cavity or recess, but may also be connected thereto, for example by means of retaining means or clamping means which can easily and quickly be removed by hand. This can be achieved, for example, by means of elastically deformable retaining means (a snap connection). Magnetic retaining means, if desired in combination with mechanical supporting, clamping or retaining means are also possible.

The battery holder according to the present invention can be constructed in such a manner that the battery carrier can be brought to a first position in which it is readily accessible for the purpose of placing the battery into or onto (in cooperation with) the battery carrier and removing it again from the latter. The battery holder can be configured in such a manner that the battery can be brought into cooperation with the battery holder very easily and without requiring precise positioning. Thus, for example, a laying surface with a positioning edge or a suitable recess may be provided. Thus, fitting a battery in this case requires a first, very simple and particularly user-friendly operation which does not yet bring the battery into its final operating position, but is only an 'initial positioning'.

Subsequently, the battery, in a second operation, is brought into the final operating position by moving the battery carrier by hand. This operation is also very simple for the user. It is sufficient to exert a force on the battery carrier by hand so that it is moved to the second position, in which the battery is in the operating position. The user does not have to bear the weight of the battery but only has to exert the comparatively small force required to move the battery carrier into the operating position.

The movement mechanism may, for example, consist of one or more telescopic arms. It is also possible to provide one or more guide rails, in which case guide means which are provided on the battery holder can be displaced on or in this/these guide rail(s). This assembly may be similar to a drawer guide, in which case it is also possible to provide guide wheels, if desired. The guide rails may be straight or curved. In an alternative embodiment, the battery carrier may be attached to a fixed part of the bicycle or the battery holder by means of one of more rotatably attached arms.

The battery carrier can also cooperate with a drive means which is adapted to automatically move the battery carrier from the first to the second position. The opposite movement, i.e. from the second position to the first position, can also be automated in this way. In this case the required operating buttons will have to be provided on the bicycle or on the battery holder itself, by means of which the user can activate this drive device.

The exact positioning of the battery into the operating position is carried out by manually or automatically moving the battery carrier, but the user does not have to do anything to achieve this final positioning since the displacement of the battery carrier takes place along a path which is defined by the structure or the movement mechanism of the battery holder. This path may be defined in such a manner that the battery, at the end point of the displacement of the battery carrier, reaches the operating position in a very accurate manner and virtually without any tolerance.

As a result thereof, a battery holder is obtained which allows the battery to be placed into and removed from the battery holder in a simple and user-friendly manner. After all, the battery can be brought into cooperation with the battery carrier during a first phase in an easily accessible location. This initial positioning of the battery does not have to be carried out with great accuracy. By moving the battery carrier in a simple manner during a second phase, the battery is brought into such a fixed operating position that the battery can no longer move during cycling and thus can no longer cause annoying noises, and, in addition, a reliable electrical contact is established between the battery and the contact points of the drive circuit.

As a result of the fact that the battery carrier is displaceable, easy accessibility of the position at which the battery holder is to be incorporated into or attached to the bicycle in order to enable removal or replacement of the battery is not of prime concern. After all, it is not so much the accessibility of the battery holder itself which matters, but the accessibility of the battery carrier when the latter is in said first position. As a result thereof, there is a greater degree of freedom in determining the position of the battery holder on the bicycle. Thus, the battery holder can be incorporated into or attached to the bicycle in a less conspicuous manner, and can also be provided next to or behind other fixed parts on the bicycle.

In a preferred embodiment, the battery holder comprises a housing for the battery, so that the battery carried along by the battery carrier is situated outside the housing when the battery carrier is in the first position and is situated inside said housing when the battery carrier is in the second position.

As a result thereof, the battery can be incorporated into the bicycle so as to be invisible and protected against knocks and weather conditions. This housing can then be given an aesthetic shape. If the battery holder is incorporated into a component of the bicycle, such as a luggage carrier or a frame of the bicycle, the housing is formed by the walls of the component of the bicycle which enclose the hollow battery space. The battery holder can then be incorporated into the bicycle in a very inconspicuous manner in an aesthetic housing which also has another use.

The battery carrier may, for example, be configured as a simple bearing surface which is connected to the battery holder on one side by means of a hinged connection, and on which the battery can be placed. The location where the battery has to be placed on the battery carrier may, for example, be delimited by upwardly protruding elements or edges or a recess or a sunk part may be provided, like a kind of shell shape, matching the shape and dimensions of the battery.

In a preferred embodiment, the housing comprises a passage via which the battery can be moved into and out of the housing by means of the battery carrier, and the battery carrier is adapted to close off said passage if the battery carrier is in the second position. A battery carrier may, for example, be provided which comprises a panel-shaped unit which has the shape and dimensions of the battery-passage. As a result, the battery carrier also acts as a lid of the battery holder.

In the most preferred embodiment, the battery holder comprises at least one stop, so that the battery is positioned against a stop by moving the battery carrier into the said second position. As a result thereof, the battery can be positioned into the operating position in a very accurate manner. Thus, it is possible to ensure that the battery reaches an operating position in which the battery adjoins one of more fixed parts of the battery holder so that the battery can no longer move in this position and therefore does not cause annoying noises during cycling.

The stop may be made of an elastically deformable material or one or more resilient elements may be provided so that the stop is elastically deformed or is displaced counter to a spring force when the battery is pushed against the stop while being moved into the operating position. Due to the rebound force which the stop exerts on the battery, the battery is held in the operating position without any tolerance.

In order to be able to determine the movement path and ultimately the operating position of the battery still more precisely, the battery holder may be provided with guide means to guide the battery while it is being moved into the operating position. These guide means may, for example, be in the form of a guiding surface which extends along (a part of) the guide track which the battery adjoins while it is being moved or, for example, only during the last part of the movement into the operating position. The guiding surface may have a slanting shape so that the battery is gradually pushed into the operating position during its displacement. It is, for example, also possible to provide two mutually facing guide surfaces on two opposite sides of the battery so that the battery is forced into the operating position between these guiding surfaces and, in the operating position, is eventually situated between these guiding surfaces without any tolerance.

It is also possible to provide guide means which are in the form of a tooth extending according to the movement path and engaging in a guide groove which is provided on the outer side of the battery. The guide means may also be made of elastically deformable material or one or more resilient elements may be provided so that the guide means are elastically deformed or are moved counter to a spring force by the battery when the latter is pushed against the guide means while being moved into the operating position.

The present invention also relates to a bicycle component for a bicycle with an electrical drive device, which is adapted to keep a battery in an operating position in which it acts as the power source for the drive device, and in which the bicycle component comprises a battery carrier which can be moved according to a predetermined path between a first position, in which the battery which it supports is not in said operating position, and a second position, in which the battery which it supports is in said operating position.

Regarding the advantages of such a bicycle component, full reference can be made to what has been stated above with respect to the bicycle according to the present invention. The other particular features of this bicycle component are defined in claims 7 to 13 and are also identical to or similar to the particular features of the above-described bicycle.

In a highly preferred embodiment, the bicycle component according to the present invention can be configured as a battery holder for an electric bicycle. Of course, this battery holder has to be attached to the bicycle. In the most preferred embodiment, the bicycle component is, for example, a luggage carrier or a frame which on the one hand retains its usual function, but on the other hand also acts as a battery holder.

In order to further explain and indicate these and other properties and features of the present invention, there now follows a more detailed description of an electric bicycle according to the present invention. It will be clear that nothing in the following description can be interpreted as limiting the protection for the present invention which is defined in the claims.

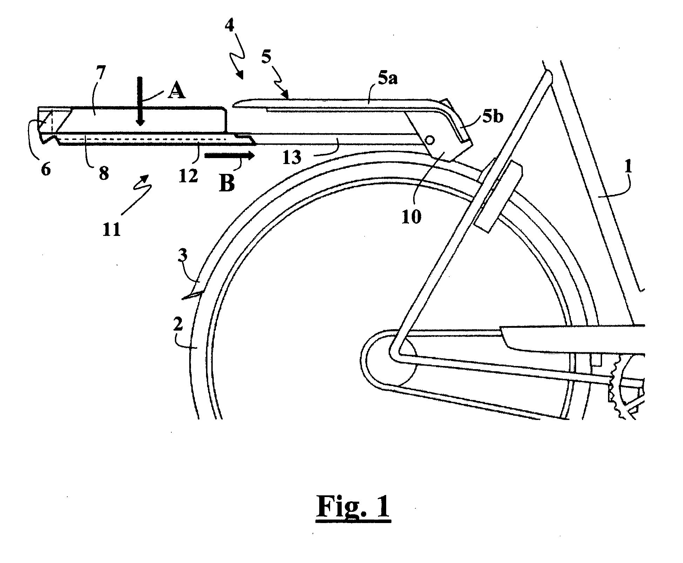

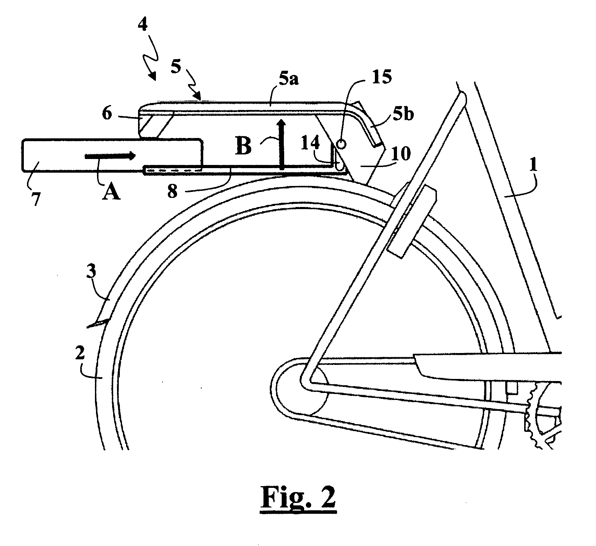

In this description, reference numerals are used to refer to the attached drawings, with identical or similar parts being denoted by the same reference numerals, and in which:
■ Fig. 1 shows a side view of an electric bicycle with a battery holder which comprises a battery carrier which can be displaced in a horizontal direction,
■ Fig. 2 shows a side view of an electric bicycle with a battery holder which comprises a battery carrier which can be displaced in a vertical direction,

Fig. 1 illustrates the rear portion of an electric bicycle. This drawing shows inter alia a portion of the frame (1) and the rear wheel (2) of the bicycle, as well as the mudguard (3) and the luggage carrier (4) which are attached in a known manner.

On the upper side, the luggage carrier (4) is provided with a substantially panel-shaped element (5) with a flat upper part (5a), the front of which (the side which faces the front wheel) changes into a downwardly bent end part (5b). The panel-shaped element (5) is made from plastic or metal (such as aluminium) or from a combination of these materials.

The wall of the upper part (5a) may be provided with openings, but may also be configured as a closed wall. The end part (5b) may be box-shaped and comprises a hollow space enclosed by walls (not shown in Fig. 1) in which, for example, a number of electrical and/or electronic components of the drive device are provided in a known manner.

On the bottom side of the panel-shaped element (5) - between the lighting element (6) and the end part (5b) - a free space is provided for the battery (7). In said free battery space, the battery (7) can be placed in the operating position in which case it electrically contacts the contact points of the drive device (not illustrated in the drawings). The battery space is delimited at the top by the flat upper part (5a) of the panel-shaped element (5) and at the bottom by a support plate (8) which is connected to a part (10) of the luggage carrier (4).

The support plate (8) is provided on or forms part of a slide (11) having at least one guide profile (12) which is displaceable in a guide rail (13) which extends underneath the panel-shaped element (5). In this embodiment, the lighting element (6) is attached to the rear end of the displaceable slide (11).

If the user wants to insert a battery (7) into the battery space, the slide (11) is firstly pushed back into the position illustrated in Fig. 1. In a first operation (indicated by arrow A), the user has to place the battery (7) on the support plate (8), thereby carrying out a kind of initial positioning of the battery with respect to the battery space. The support plate (8) on the pushed-back slide is readily accessible and the battery (7) does not yet have to be positioned exactly during this operation.

In a second operation (indicated by arrow B), the user has to push the slide (11) forward by hand. This causes the battery (7) to move into the battery space. Here, a stop may also be provided if desired so that the battery hits this stop as soon as the support plate (8) reaches the second position. During this second operation, the battery (7) is moved and thus automatically positioned in such a manner (optionally using guide means which are adapted for this purpose) that it reaches an operating position without any tolerance, resulting in a very good electrical contact.

Fig. 2 shows an alternative embodiment in which the support plate (8) can be moved up and down with respect to the panel-shaped element (5). At the front, the support plate (8) has a vertical upwardly protruding edge which is provided with a vertically extending slot (14). A guide pin (15) which forms part of the fixed part (10) of the luggage carrier (4) is accommodated in this slot (14), so that the support plate (8) can be moved up and down and is guided by the guide pin (15) located in the slot (14).

At the rear end of the upper part (5a), on the bottom side, a downwardly protruding lighting element (6) is provided into which the rear lamp of the bicycle is incorporated.

The support plate (8) can be moved down into a first position in which it rests on the mudguard (3), as is illustrated in Fig. 2, or hangs above the mudguard (3) at an intermediate distance.

If the user wants to insert a battery (7) into the battery space, the support plate (8) is initially moved into this first position. In a first operation (indicated by arrow A), the user has to place the battery (7) on the support plate (8), thereby carrying out a kind of initial positioning of the battery with respect to the battery space. The support plate (8) which has been moved down is readily accessible and the battery (7) does not yet have to be positioned exactly during this operation.

In a second operation (indicated by arrow B), the user has to push the support plate (8) upwards into the second position by hand. This causes the battery (7) to move into the battery space which is provided on the bottom side of the panel-shaped element (5), between the lighting element (6) and the end part (5b). In this battery space, the battery (7) can be placed in said operating position. The support plate (8) is held in the second position by means of known retaining means (not shown), such as any known locking mechanism by means of which a flap or lid is held in a closed position. The battery space is closed off at the bottom by the support plate (8) which has been pushed up.

As soon as the support plate (8) reaches the second position, the battery (7) is pushed against a stop wall (not shown) in the battery space. In this way, the battery (7) is clamped between the support plate (8) and the stop wall without a tolerance. During the second operation, the battery (7) is automatically positioned in such a manner (optionally using guide means) that it reaches an operating position without any tolerance, resulting in a very good electrical contact.

## Claims

1. Bicycle provided with an electrical drive device and a battery (7), comprising a battery holder which is adapted to keep the battery in an operating position in which it acts as power source for the drive device, and a battery carrier (8) which can be moved according to a predetermined path between a first position, in which the battery (7) carried along thereby is not in said operating position, and a second position, in which the battery (7) carried along thereby is in said operating position, **characterized in that** the battery carrier (8) is connected to the bicycle or the battery holder by means of a movement mechanism (12, 13), (14, 15) which defines a substantially rectilinear vertical or horizontal movement path for the battery carrier (8).

2. Bicycle according to claim 1, **characterized in that** the battery holder comprises a housing (5, 8) for the battery (7), **in that** the battery (7) carried along by the battery carrier (8) is situated outside the housing (5, 8) when the battery carrier is in the first position and is situated inside said housing (5, 8) when the battery carrier is in the second position.

3. Bicycle according to claim 2, **characterized in that** the housing (5, 8) comprises a passage via which the battery (7) can be moved into and out of the housing (5, 8) by means of the battery carrier (8), and **in that** the battery carrier (8) is adapted to close off said passage if the battery carrier (8) is in the second position.

4. Bicycle according to any of the preceding claims, **characterized in that** the battery carrier (8) is connected to the bicycle or the battery holder by means of a movement mechanism, which defines a movement path for the battery carrier which consists of two or more substantially rectilinear trajectories.

5. Bicycle according to any of the preceding claims, **characterized in that** it comprises a stop, so that the battery (7) is positioned against the stop by moving the battery carrier (8) into the said second position.

6. Bicycle according to any of the preceding claims, **characterized in that** it comprises guide means which are adapted to guide the battery (7) while it is being moved into the operating position.

7. Bicycle component (4) for a bicycle with an electrical drive device, adapted to keep a battery (7) in an operating position in which it acts as the power source for the drive device, and comprising a battery carrier (8) which can be moved according to a predetermined path between a first position, in which the battery (7) carried along thereby is not in said operating position, and a second position, in which the battery (7) carried along thereby is in said operating position, **characterized in that** the battery carrier (8) is connected to the bicycle component (4) by means of a movement mechanism (12, 13), (14, 15) which defines a substantially rectilinear vertical or horizontal movement path for the battery carrier (8).

8. Bicycle component according to claim 7, **characterized in that** the bicycle component comprises a housing (5, 8) for the battery (7), **in that** the battery (7), carried along by the battery carrier (8) is situated outside the housing (5, 8) when the battery carrier (8) is in the first position and is situated inside said housing (5, 8) when the battery carrier (8) is in the second position.

9. Bicycle component according to claim 8, **characterized in that** the housing (5, 8) comprises a passage via which the battery (7) can be moved into and out of the housing by means of the battery carrier (8), and **in that** the battery carrier (8) is adapted to close off said passage if the battery carrier (8) is in the second position.

10. Bicycle component according to any of claims 7 to 9, **characterized in that** the battery carrier (8) is connected to the bicycle component by means of a movement mechanism, which defines a movement path for the battery carrier (8) which consists of two or more substantially rectilinear trajectories or runs in the shape of a curve.

11. Bicycle component according to any of claims 7 to 10, **characterized in that** the bicycle component comprises a stop, so that the battery (7) is positioned against the stop by moving the battery carrier (8) into said second position.

12. Bicycle component according to any of claims 7 to 11, **characterized in that** the bicycle component comprises guide means which are adapted to guide the battery (7) while it is being moved to the operating position.

13. Bicycle component according to any of claims 7 to 12, **characterized in that** it is a battery holder, a luggage carrier or a frame.

## Patentansprüche

1. Fahrrad, bereitgestellt mit einer elektrischen Antriebsvorrichtung und einer Batterie (7), umfassend eine Batteriehalterung, welche ausgelegt ist, um die Batterie in einer Betriebsposition zu halten, in der sie als Stromquelle für die Antriebsvorrichtung wirkt, und einen Batterieträger (8), welcher entsprechend einer vorbestimmten Bahn zwischen einer ersten Position, in welcher die dadurch mitgetragene Batterie (7) sich nicht in der Betriebsposition befindet, und einer zweiten Position, in welcher die dadurch mitgetragene Batterie (7) sich in der Betriebsposition befindet, **dadurch gekennzeichnet, dass** der Batterieträger (8) mit dem Fahrrad oder der Batteriehalterung mittels eines Bewegungsmechanismus (12, 13), (14, 15) verbunden ist, welcher eine im Wesentlichen geradlinige vertikale oder horizontale Bewegungsbahn für den Batterieträger (8) definiert.

2. Fahrrad nach Anspruch 1, **dadurch gekennzeichnet, dass** die Batteriehalterung ein Gehäuse (5, 8) für die Batterie (7) umfasst, so dass die Batterie (7), welche durch den Batterieträger (8) mitgetragen wird, außerhalb des Gehäuses (5, 8) angeordnet ist, wenn der Batterieträger sich in der ersten Position befindet, und innerhalb des Gehäuses (5, 8) angeordnet ist, wenn sich der Batterieträger in der zweiten Position befindet.

3. Fahrrad nach Anspruch 2, **dadurch gekennzeichnet, dass** das Gehäuse (5, 8) eine Durchführung umfasst, über welche die Batterie (7) hinein in das Gehäuse (5, 8) und heraus aus diesem mittels des Batterieträgers (8) bewegt werden kann, und dass der Batterieträger (8) ausgelegt ist, um die Durchführung zu verschließen, wenn sich der Batterieträger (8) in der zweiten Position befindet.

4. Fahrrad nach einem beliebigen der vorangehenden Ansprüche, **dadurch gekennzeichnet, dass** der Batterieträger (8) mit dem Fahrrad oder der Batteriehalterung mittels eines Bewegungsmechanismus verbunden ist, welcher eine Bewegungsbahn für den Batterieträger definiert, die aus zwei oder mehr im Wesentlichen geradlinigen Bahnen besteht.

5. Fahrrad nach einem beliebigen der vorangehenden Ansprüche, **dadurch gekennzeichnet, dass** es einen Anschlag umfasst, so dass die Batterie (7) gegen den Anschlag durch Bewegen des Batterieträgers (8) in die zweite Position positioniert ist.

6. Fahrrad nach einem beliebigen der vorangehenden Ansprüche, **dadurch gekennzeichnet, dass** es Führungsmittel umfasst, welche ausgelegt sind, um die Batterie (7) zu führen, während sie in die Betriebsposition bewegt wird.

7. Fahrradkomponente (4) für ein Fahrrad mit einer elektrischen Antriebsvorrichtung, welche ausgelegt ist, um eine Batterie (7) in einer Betriebsposition zu halten, in der sie als Stromquelle für die Antriebsvorrichtung wirkt, und welche einen Batterieträger (8) umfasst, welcher entsprechend einer vorbestimmten Bahn zwischen einer ersten Position, in welcher die dadurch mitgetragene Batterie (7) sich nicht in der Betriebsposition befindet, und einer zweiten Position, in welcher die dadurch mitgetragene Batterie (7) sich in der Betriebsposition befindet, **dadurch gekennzeichnet, dass** der Batterieträger (8) mit der Fahrradkomponente (4) mittels eines Bewegungsmechanismus (12, 13), (14, 15) verbunden ist, welcher eine im Wesentlichen geradlinige vertikale oder horizontale Bewegungsbahn für den Batterieträger (8) definiert.

8. Fahrradkomponente nach Anspruch 7, **dadurch gekennzeichnet, dass** die Fahrradkomponente ein Gehäuse (5, 8) für die Batterie (7) umfasst, so dass die Batterie (7), welche durch den Batterieträger (8) mitgetragen wird, außerhalb des Gehäuses (5, 8) angeordnet ist, wenn der Batterieträger (8) sich in der ersten Position befindet, und innerhalb des Gehäuses (5, 8) angeordnet ist, wenn sich der Batterieträger (8) in der zweiten Position befindet.

9. Fahrradkomponente nach Anspruch 8, **dadurch gekennzeichnet, dass** das Gehäuse (5, 8) eine Durchführung umfasst, über welche die Batterie (7) hinein in das Gehäuse und heraus aus diesem mittels des Batterieträgers (8) bewegt werden kann, und dass der Batterieträger (8) ausgelegt ist, um die Durchführung zu verschließen, wenn sich der Batterieträger (8) in der zweiten Position befindet.

10. Fahrradkomponente nach einem beliebigen der Ansprüche 7 bis 9, **dadurch gekennzeichnet, dass** der Batterieträger (8) mit der Fahrradkomponente mittels eines Bewegungsmechanismus verbunden ist, welcher eine Bewegungsbahn für den Batterieträger (8) definiert, die aus zwei oder mehr im wesentlichen geradlinigen Bahnen besteht oder in der Form einer Kurve verläuft.

11. Fahrradkomponente nach einem beliebigen der Ansprüche 7 bis 10, **dadurch gekennzeichnet, dass** die Fahrradkomponente einen Anschlag umfasst, so dass die Batterie (7) gegen den Anschlag durch Bewegen des Batterieträgers (8) in die zweite Position positioniert ist.

12. Fahrradkomponente nach einem beliebigen der Ansprüche 7 bis 11, **dadurch gekennzeichnet, dass** die Fahrradkomponente Führungsmittel umfasst, welche ausgelegt sind, um die Batterie (7) zu führen, während sie in die Betriebsposition bewegt wird.

13. Fahrradkomponente nach einem beliebigen der Ansprüche 7 bis 12, **dadurch gekennzeichnet, dass** sie eine Batteriehalterung, ein Gepäcksträger oder ein Rahmen ist.

## Revendications

1. Bicyclette pourvue d'un dispositif d'entraînement électrique et d'une batterie (7), comprenant un support de batterie qui est à même de maintenir la batterie en position de fonctionnement, dans laquelle elle agit comme source d'énergie pour le dispositif d'entraînement, et un chariot de batterie (8), qui peut être déplacé selon un trajet prédéterminé entre une première position, dans laquelle la batterie (7) entraînée de la sorte n'est pas dans ladite position de fonctionnement, et une seconde position, dans laquelle la batterie (7) entraînée de la sorte se trouve dans ladite position de fonctionnement, **caractérisée en ce que** le chariot de batterie (8) est raccordé à la bicyclette ou au support de batterie au moyen d'un mécanisme de mouvement (12, 13), (14, 15) qui définit un trajet de mouvement vertical ou horizontal sensiblement rectiligne pour le chariot de batterie (8).

2. Bicyclette selon la revendication 1, **caractérisée en ce que** le support de batterie comprend un boîtier (5, 8) pour la batterie (7) et **en ce que** la batterie (7) entraînée par le chariot de batterie (8) est située hors du boîtier (5, 8) lorsque le chariot de batterie se trouve dans la première position et est située dans ledit boîtier (5, 8) lorsque le chariot de batterie se trouve dans la seconde position.

3. Bicyclette selon la revendication 2, **caractérisée en ce que** le boîtier (5, 8) comprend un passage par lequel la batterie (7) peut être déplacée dans le boîtier (5, 8) et hors de celui-ci au moyen du chariot de batterie (8) et **en ce que** le chariot de batterie (8) est à même de fermer ledit passage si le chariot de batterie (8) se trouve dans la seconde position.

4. Bicyclette selon l'une quelconque des revendications précédentes, **caractérisée en ce que** le chariot de batterie (8) est raccordé à la bicyclette ou au support de batterie au moyen d'un mécanisme de mouvement, qui définit un trajet de mouvement pour le chariot de batterie qui est constitué de deux trajectoires sensiblement rectilignes ou plus.

5. Bicyclette selon l'une quelconque des revendications précédentes, **caractérisée en ce qu'**elle comprend un arrêt de sorte que la batterie (7) soit positionnée contre l'arrêt en déplaçant le chariot de batterie (8) dans ladite seconde position.

6. Bicyclette selon l'une quelconque des revendications précédentes, **caractérisée en ce qu'**elle comprend des moyens de guidage qui sont à même de guider la batterie (7) tandis qu'elle est déplacée dans la position de fonctionnement.

7. Composant de bicyclette (4) pour une bicyclette pourvue d'un dispositif d'entraînement électrique, qui est à même de maintenir une batterie (7) en position de fonctionnement, dans laquelle elle agit comme source d'énergie pour le dispositif d'entraînement, et comprenant un chariot de batterie (8), qui peut être déplacé selon un trajet prédéterminé entre une première position, dans laquelle la batterie (7) entraînée de la sorte n' est pas dans ladite position de fonctionnement, et une seconde position, dans laquelle la batterie (7) entraînée de la sorte se trouve dans ladite position de fonctionnement, **caractérisé en ce que** le chariot de batterie (8) est raccordé au composant de bicyclette (4) au moyen d'un mécanisme de mouvement (12, 13), (14, 15) qui définit un trajet de mouvement vertical ou horizontal sensiblement rectiligne pour le chariot de batterie (8).

8. Composant de bicyclette selon la revendication 7, **caractérisé en ce que** le composant de bicyclette comprend un boîtier (5, 8) pour la batterie (7) et **en ce que** la batterie (7) entraînée par le chariot de batterie (8) est située hors du boîtier (5, 8) lorsque le chariot de batterie (8) se trouve dans la première position et est située dans ledit boîtier (5, 8) lorsque le chariot de batterie (8) se trouve dans la seconde position.

9. Composant de bicyclette selon la revendication 8, **caractérisé en ce que** le boîtier (5, 8) comprend un passage par lequel la batterie (7) peut être déplacée dans le boîtier et hors de celui-ci au moyen du chariot de batterie (8) et **en ce que** le chariot de batterie (8) est à même de fermer ledit passage si le chariot de batterie (8) se trouve dans la seconde position.

10. Composant de bicyclette selon l'une quelconque des revendications 7 à 9, **caractérisé en ce que** le chariot de batterie (8) est raccordé au composant de bicyclette au moyen d'un mécanisme de mouvement, qui définit un trajet de mouvement pour le chariot de batterie (8) qui est constitué de deux trajectoires sensiblement rectilignes ou plus ou de parcours sous la forme d'une courbe.

11. Composant de bicyclette selon l'une quelconque des revendications 7 à 10, **caractérisé en ce que** le composant de bicyclette comprend un arrêt de sorte que la batterie (7) soit positionnée contre l'arrêt en déplaçant le chariot de batterie (8) dans ladite seconde position.

12. Composant de bicyclette selon l'une quelconque des revendications 7 à 11, **caractérisé en ce que** le composant de bicyclette comprend des moyens de guidage qui sont à même de guider la batterie (7) tandis qu'elle est déplacée dans la position de fonctionnement.

13. Composant de bicyclette selon l'une quelconque des revendications 7 à 12, **caractérisé en ce qu'** il s'agit d' un support de batterie, d' un porte-bagage ou d'un cadre.
